Europäisches Patentamt

European Patent Office

Office européen des brevets

(19)

(11) Publication number: **0 019 971**
**B1**

(12) # EUROPEAN PATENT SPECIFICATION

(45) Date of publication of patent specification: **23.11.83**

(21) Application number: **80200468.9**

(22) Date of filing: **19.05.80**

(51) Int. Cl.³: **F 16 J 9/00, F 16 J 9/20, F 02 F 5/00**

(54) **A piston ring.**

(30) Priority: **01.06.79 IT 2319279**

(43) Date of publication of application:
**10.12.80 Bulletin 80/25**

(45) Publication of the grant of the patent:
**23.11.83 Bulletin 83/47**

(84) Designated Contracting States:
**DE FR GB SE**

(56) References cited:
**CH - A - 182 790**
**CH - A - 373 594**
**DE - A - 2 101 529**
**DE - A - 2 234 285**
**FR - A - 495 554**
**FR - A - 914 968**
**US - A - 1 378 894**
**US - A - 2 209 925**
**US - A - 2 311 731**

(73) Proprietor: **Cattaneo, Leopoldo**
**Via de Alessandri 1**
**I-20144 Milano (IT)**

(72) Inventor: **Cattaneo, Leopoldo**
**Via de Alessandri 1**
**I-20144 Milano (IT)**

(74) Representative: **Giambrocono, Alfonso, Dott. Ing.**
**Via Rosolino Pilo 19/B**
**I-20129 Milano (IT)**

Courier Press, Leamington Spa, England.

EP 0 019 971 B1

# A piston ring

The present invention relates to a piston ring having the desired peripheral rigidity yet adapted to have a controlled deformation during hot operation.

With the term 'piston ring' reference is hereinafter made to a single segment elastic type ring, including the oil-scraper ring, carried by a movable member (i.e. a piston) and adapted to engage a cylindrical surface (i.e. a cylinder liner), said piston ring being conventionally used in internal combustion engines.

As known, one of the major difficulties encountered in obtaining a good seal between a piston ring and a cylindrical surface is due to the fact that the tips, i.e. the end portions of the piston ring defining the cut, do not exactly conform with the cylindrical surface when their outer bending radius does not exactly correspond to the bending radius of said cylindrical surface. Such a lack of correspondence is usually due to the fact that both the cylinder liner and the piston ring, after some hundred hours of operation, become worn and are subjected to local ovalizations which can be compensated only along a wide arc a good portion of which does not engage to the cylinder liner and, therefore, is not tight: this facilitates the collapsing of the piston ring and consequent blow-by of the operating fluids.

This drawback is very serious for internal combustion engines and is particularly prevalent in the first piston ring and in the oil-scraper ring.

With respect to the first piston ring, the so called flame damper effect is diminished to a large extent since the external gas pressure acting, during combustion, on that portion of the piston ring defining a gap with the cylinder liner hastens, near the top dead center of the stroke, the formation of a further opening of said gap between the piston ring and the cylinder liner. This is due to the clearance of the tips being increased by the ovalizations both of the cylinder liner and of the piston ring. Obviously the engine is severely damaged by the wear caused combined with the flame blow-by between liner and piston ring.

With respect to the oil-scraper ring, in the ovalized and/or worn out area the tight seal between the piston liner and piston ring is destroyed with a consequent passage and burring of oil.

Further to the above, it should be pointed out that the flame blow-by and oil passage drawback is further aggravated by the fact that, for example, in a cylinder liner having a diameter of 100 mm. the expansion difference, between cold and hot engine, of the mean fiber of the liner and ring is, in the upper portion of said liner, of further 0,06 ÷ 0,10 mm. while, in the lower portion of the same liner, said difference can also be of 0,14 mm. It should also be kept in mind that in an internal combustion engine the inner portion of the piston ring has a temperature higher than that of the outer portion since the latter is in contact with the cylinder liner which is usually cooled, so that the bending radius on the tips, in the example of a cylinder liner having a diameter of 100 mm., is further increased between 0,1 and 0,3 mm.

Several attempts have been made to overcome the above mentioned drawbacks by attempting to improve the radial or axial elasticity of the ring. The US patent n. 2.209.925 provides for a piston ring of the composite type comprising a pair of superposed rings each provided with slots forming bowed portions so arranged to seat on a flat portion of the adjoining ring so as to form radial passageways which render the whole packing axially compressible. The Swiss patent n. 182.790 provides for a piston ring having at least one groove extending along the full circumference of the ring and opening on the upper or lower face thereof so as to render the ring elastic in a radial direction. The German published patent application n. 2.101.529 also provides for a piston ring so constructed to improve its radial elasticity, this being achieved by constructing the ring by concentrically disposing two rings and by elastically connecting said two rings or by interposing between two concentrically disposed and distinct rings an elastic element. The German published patent application n. 2.234.285 and the French patent n. 914.968 both provide for a composite type piston ring comprising at least two superposed rings each having radial slits opening on the inside or outside edge thereof.

The above cited patents and applications improve the radial and/or axial elasticity of the ring but do not satisfy the conditions of simultaneously controlling the elastic and thermal deformations and the heat flowing across the radial thickness of the ring and, if necessary, also along the main fiber of the same ring in the various positions assumed during its motion and when said ring is of a single segment elastic type.

The object of the present invention is to provide a piston ring of simple construction conceived and structured (a) for avoiding flame blows-by and oil passage between the cylinder liner and the ring and (b) for controlling the temperature and deformations along the radial thickness of the ring and, if necessary, along the mean fiber of the same ring.

According to the invention, a single segment elastic type piston ring for internal combustion engines having a first support surface resting on a first side of a conventional groove circumferentially provided in a piston and a second support surface resting on an opposite side of said groove, said first and second sides being transversely disposed relative to said piston, is essentially characterized in that said piston ring comprises a plurality of peripherally spaced apart slots extending axially into the ring from at least one of said support surfaces, the slots not intersecting either the outer or inner peripheral surfaces of the ring, and axially disposed relative to the thickness of said piston ring, the disposition, orientation, spacing and shape of the slots being chosen for simultaneously controlling elastic and thermal deformation of the ring and heat flowing across the same ring in the various positions that the ring assumes during motion of the piston.

One way for carrying out the invention is described in detail below with reference to the drawings which illustrate only some specific embodiments, in which:

Fig. 1 is a diagrammatic cross section showing a piston mounted in a cylinder liner and provided with a piston ring according to the invention;

Fig. 2 is a plan view of a piston ring according to the invention subdivided in four quadrants, each showing one of the many possible embodiments of the invention; and

Figs. 3, 4, 5 and 6 are sectional views respectively taken along the lines A—A, B—B, C—C and D—D of Fig. 2.

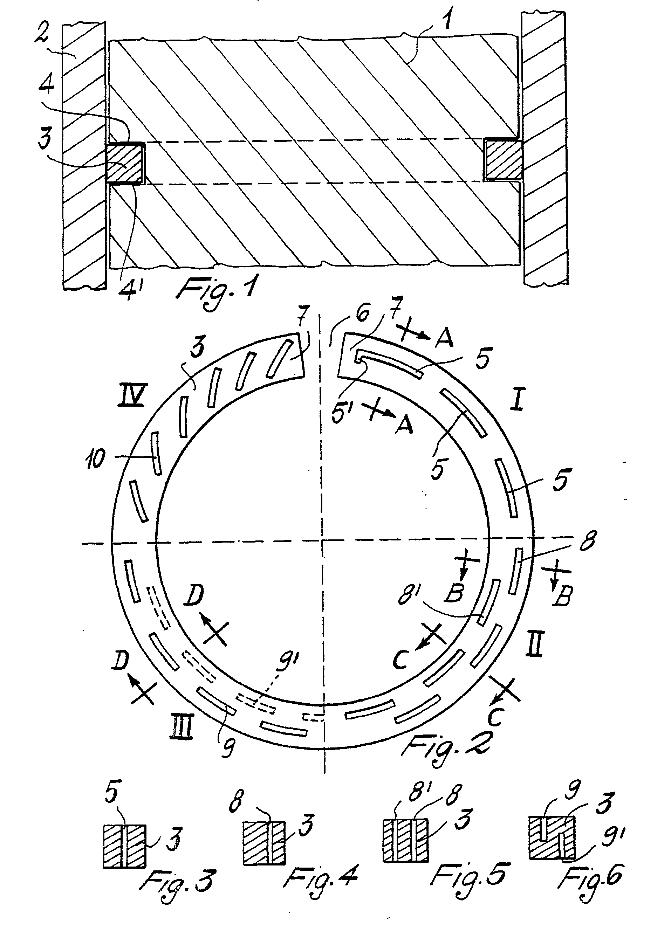

With reference to Fig. 1, a piston 1 — reciprocable within and along an internal combustion engine cylinder liner 2 — has a circumferentially disposed groove for conventionally seating a piston ring 3. Said groove has two opposed sides 4 and 4', transverse to the piston 1, for supporting said ring 3.

In Fig. 2 the piston ring 3 is subdivided in four quadrants I, II, III and IV in each of which one possible embodiment of the invention is shown.

In the quadrant I slots 5 are formed which pass through the axial thickness of the piston ring 3, said slots being arranged in a single row, perpendicular to the piston ring plane and concentric with the liner 2. The slot 5 nearest to the cut 6 of the piston ring 3 is also provided with a slot 5' parallel to said cut and this for obtaining a maximum flexibility at the tips 7, wherein the adaptability capacity is the least.

In the quadrant II slots 8 and 8', also passing through the axial thickness of the piston ring 3, are provided in two rows, the slots of one row being offset relative to the slots of the other row.

In the quadrant III slots 9, which do not pass through the axial thickness of the piston ring, are provided on a first surface of said piston ring and slots 9' are provided on the second and opposite surface of the same ring. In the embodiment shown, the slots 9 and 9' are radially offset one with respect to the other.

In the quadrant IV angled slots, 10 are provided, the latter not passing completely through the thickness of the piston ring.

The various slots can be obtained in any desired manner, for example:

a) by boring holes or milling with a mechanical tool through the piston ring surfaces so as to obtain the desired slots;

b) by removing material for obtaining the slots by means of an electronic or laser beam or by means of electroerosion;

c) by making the piston ring by sintering or sinterforging and by inserting into the mold non-sintering inserts, said inserts being also in a material which can be eliminated, for example, by oxidation or by means of solvents;

d) by combining by means of superimposition and/or winding a plurality of elements already provided with the desired slots and by welding or brazing the various elements to obtain a cylinder having the same height as the axial thickness of the piston ring or having any desired axial length so that the so obtained cylinder can be cut in several pieces having a thickness corresponding to the axial thickness of the piston ring.

It should be noted, however, that the manner for obtaining the various slots is irrelevant and is not within the scope of the present invention the essence of which is to provide a piston ring having slots so conformed and disposed as to obtain a different elastic behaviour, i.e. a higher and controlled flexibility, of the piston ring at different points thereof; a different flow of the heat transmission from the inner to the outer part of the piston ring; and a controlled engagement of the piston ring with the liner in the different phases which said piston ring undergoes.

The slots will be calculated with such dimensions so that the vibrations (radial, axial and torsional) both of the piston ring and of the control means be always out of synchronism with the harmonics of whatever order of the cycle diagram when the energy generated by said harmonics overcome the damping capacity of the piston ring or of the considered portion of said piston ring.

**Claim**

A single segment elastic type piston ring for internal combustion engines having a first support surface resting on a first side (4) of a conventional groove circumferentially provided in a piston (1) and a second support surface resting on an opposite side (4') of said groove, said first and second sides (4, 4') being transversely disposed relative to said piston (1), characterized in that said piston ring (3) comprises a plurality of peripherally spaced apart slots extending axially into the ring from at least one of said support surfaces, the slots not intersecting either the outer or inner peripheral surfaces of the ring, and axially disposed relative to the thickness of said piston ring (3), the disposition, orientation, spacing and shape of the slots being chosen for simultaneously controlling elastic and thermal deformation of the ring and heat flowing across the same ring in the various positions that the ring assumes during motion of the piston.

## Revendication

Une bague de piston du type élastique à segment unique pour moteurs à combustion interne, ayant une première surface de portée prenant appui sur un premier côté (4) d'une gorge traditionnelle prévue circonférentiellement dans un piston (1), et une deuxième surface de portée prenant appui sur un côté opposé (4') de ladite gorge, ledit premier et ledit deuxième côtés (4, 4') étant disposés transversalement par rapport audit piston (1), la réalisation étant caractérisée par le fait que ladite bague de piston (3) comprend une pluralité de fentes distantes périphériquement l'une de l'autre et s'étendant axialement dans la bague à partir d'au moins une des dites surfaces de portée, les fentes n'intersectionnant ni la surface périphérique extérieure ni la surface périphérique intérieure de la bague, et les fentes étant axialement disposées par rapport à l'épaisseur de ladite bague de piston (3), la disposition, l'orientation, la distance d'écartement et le profil des bagues étant choisis de façon à contrôler simultanément la déformation élastique et thermique de la bague et la chaleur se débitant dans la même bague, dans les différentes positions que prend la bague durant le mouvement du piston.

## Patentanspruch

Kolbenring vom Typ eines elastischen Einzelsegments für Verbrennungskraftmaschinen mit einer ersten Stützfläche, die sich auf eine erste Seite (4) einer herkömmlichen, am Umfang eines Kolbens (1) vorgesehenen Nut abstützt und mit einer zweiten Stützfläche, welche sich an einer gegenüberliegenden Seite (4') der Nut abstützt, wobei die ersten und zweiten Seiten (4, 4') bezüglich des Kolbens (1) transversal angeordnet sind, dadurch gekennzeichnet, daß der Kolbenring (3) eine Vielzahl von peripher mit Abstand voneinander angeordneten Schlitzen umfaßt, welche sich axial in den Ring erstrecken, und zwar von wenigstens einer der Stützflächen aus, wobei die Schlitze weder die äußere noch die innere periphere Oberfläche des Rings durchbrechen und axial in Relation zu der Dicke des Kolbenrings (3) angeordnet sind, wobei die Anordnung, Orientierung, der Abstand und die Form der Schlitze gewählt wird zur gleichzeitigen Steuerung von elastischer und thermischer Deformation des Rings und des Wärmeübergangs über den gleichen Ring in den verschiedenen Positionen, welche der Ring während der Kolbenbewegung einnimmt.

0 0 1 9 9 7 1

Fig. 1

Fig. 2

Fig. 3

Fig. 4

Fig. 5

Fig. 6